## Europäisches Patentamt

(19) **European Patent Office**

**Office européen des brevets**

(11) Publication number: **0 013 356**
**B1**

(12) **EUROPEAN PATENT SPECIFICATION**

(45) Date of publication of patent specification: **12.01.83**

(51) Int. Cl.³: **B 01 D 46/52, B 01 D 46/02**

(21) Application number: **79105009.9**

(22) Date of filing: **07.12.79**

(54) Gas filter.

(30) Priority: **15.01.79 DE 2901414**

(43) Date of publication of application:
**23.07.80 Bulletin 80/15**

(45) Publication of the grant of the patent:
**12.01.83 Bulletin 83/2**

(84) Designated Contracting States:
**AT BE CH FR GB IT NL SE**

(56) References cited:
**FR - A - 1 334 612**
**GB - A - 974 353**
**US - A - 2 907 408**
**US - A - 3 144 315**
**US A - 3 500 618**

(73) Proprietor: **AMERICAN AIR FILTER COMPANY, INC.**
**215 Central Avenue**
**Louisville, Kentucky 40277 (US)**

(72) Inventor: **Kamps, G.L.L.**
**Hoofdkade 97**
**Ter Apel (NL)**
Inventor: **Moltzer, J.S.P.**
**Norderakkers 18**
**Dalerveen (NL)**
Inventor: **Platteeuw, P.J.**
**Trumanstraat 41**
**Veenoord (NL)**

(74) Representative: **Patentanwälte Dipl.-Ing. A. Grünecker, Dr.-Ing. H. Kinkeldey, Dr.-Ing. W. Stockmair,**
**Dr. rer. nat. K. Schumann, Dipl.-Ing. P.H. Jakob, Dr. rer. nat. G. Bezold Maximilianstrasse 43**
**D-8000 München 22 (DE)**

Courier Press, Leamington Spa, England.

# Gas filter

The invention relates to a gas filter, especially a room air filter, comprising a rectangular frame and an exchangeable filter pack which has gas inlet and outlet openings and includes a filter web arranged in zig-zag fashion to form a plurality of filter pockets disposed in side-by-side relationship, the filter web being secured between peripheral walls, and further comprising a support structure mounted within the frame and shaped to match the plies of the filter web to support the same.

A gas filter of the aforesaid type has been known from German Patent 1 293 005. In the case of this filter only the peripheral walls extending in the direction of the plies are stiff and are made of cardboard, for example. The two peripheral walls extending transversely to the direction of the plies are made of a foldable foil. The filter web which is folded in zig-zag fashion is secured with its free longitudinal edges to these foil-like peripheral walls in a gas-tight manner.

This design makes it possible to put the filter pack in a shape for transport in which it takes little space. If the two rigid peripheral walls are pressed together the flexible peripheral walls will fold. The same applies to the plastic filter web, which is already folded in zig-zag fashion. In condition for transport the two rigid peripheral walls are thus so close to each other as the folding of the flexible peripheral walls and the enclosed filter web permit.

For installation of the known gas filter such flexibility is disadvantageous, though. The support structure predetermines the shape which the filter pack must have when in operative condition. That means that for applying the filter pack and the zig-zagged filter web the filter pack has to be extended first to match the size of the support structure. The filter pack cannot be placed over the support structure until it is fully extended.

To avoid damaging of the filter web, which would have an adverse effect to the filter action, it is necessary in the case of the known filter that two operating persons hold the filter pack on opposite sides thereof and lower it slowly to place it over the support structure. This is rather difficult especially since the zig-zagged filter web is merely held at its side edges by the flexible foils and it may easily happen for one or a plurality of plies to be misaligned relative to the support structure during the placing on of the filter pack.

When the gas filter is contaminated, it must be replaced. The removal of the known gas filter incurs the drawback that the contaminants entrapped in the gas filter can escape again when the filter is put in its form for transport, since then the volume is reduced again by pressing the two rigid peripheral walls together and therefore the escaping air may entrain previously trapped contaminating particles. When the filter is in its folded transport shape it is still not sure that the contaminating matter will in fact remain within the filter.

The present invention therefore has underlying to it the object to provide an easily installable gas filter of the aforesaid type which for transportation purposes can be reduced in volume in such a manner that the gas inlet opening is closed as well.

According to the present invention this object is attained in that all peripheral walls are rigid and jointly define a rigid container whose gas inlet opening is adapted to be closed by folding and collapsing marginal portions of the peripheral walls adjacent this opening and that the plies of the filter web disposed adjacent the gas outlet opening are held by tensioning means which extend in the direction of the plies and are anchored to opposed peripheral walls.

This design enables easy installation of the filter pack according to the invention. Since all peripheral walls are rigid and jointly define a rigid container for the filter pack, the filter can easily be placed over the support structure by a single operating person. The container affords the stability necessary therefor.

Despite its rigidity the container can also be put in a form suitable for transportation in which it is reduced in volume relative to its installed condition. This is possible, because the peripheral walls are foldable in the areas thereof adjacent the gas inlet opening and when they are in collapsed condition they can close the gas inlet opening completely. The unfolding of the peripheral walls can be imagined to be similar to the unfolding of folding boxes, for example.

The closing of the gas inlet opening does not result only in a box shape of the filter which is reduced in volume. It also affords the advantage that during transportation of a used filter pack the entrapped contaminating matter remains safely within the filter pack, since the gas inlet opening remains closed during transportation.

By suspending the filter web plies which are disposed adjacent the gas outlet opening these plies are stabilized for being placed over the support structure. It need not be apprehended that one or more plies will be misaligned relative to the folded contours of the support structure and cause difficulty during the placing of the filter over the support structure.

For installation it is useful, if in an advantageous further development of the invention, the longitudinal edges of two adjacent web portions which have a common ply adjacent the gas inlet opening are connected to each other. Thereby filter pockets are formed which are open towards the gas outlet opening. As a result, these pockets can easily be placed over the support structure. They can be lowered down over the individual members of the support structure quasi like hoods.

The provision of connecting the longitudinal edges to each other facilitates movability of the filter web within the space defined by the peripheral walls. This is advantageous with respect to the folding of the peripheral walls for placing the filter pack in condition for transportation. The flexibility of the filter pockets formed prevents the filter web from being damaged during folding of the filter pack.

An advantageous further development of the invention resides in that end portions of the edges of the openings of the filter pockets adjacent the gas outlet opening are respectively secured to adjacent portions of the peripheral walls. In this embodiment, relatively short sections of the edges of the openings of the filter pockets are secured, as by adhesive bonding, to the respective adjacent portion of the peripheral wall, whereby a peripheral fastening strip fully surrounding the gas outlet opening is formed by the sequential arrangement of edge portions which, on the one hand, provides further stability to the filter pack in the region of the gas outlet opening and, on the other hand, increases the sealing effect.

For ease and installation and removal of the filter pack, it is useful for the filter web to be secured with the plies thereof disposed adjacent the gas inlet opening to the peripheral walls by means of flexible holding means.

If a new filter to be installed is opened by raising the collapsed marginal portions of the peripheral walls, the filter web is automatically unfolded and the plies are brought into the correct position as a result of the connections between the peripheral walls and the plies of the filter web adjacent the gas inlet opening.

It can be of advantage, if the filter web has flaps on both sides of the plies thereof adjacent the gas inlet opening which are anchored in slots of the peripheral walls extending transversely to the direction of the plies. This way of suspending the plies is inexpensive, since the slots can easily be provided in the peripheral walls and the flaps can quickly be anchored in the slots. Then the flaps can be anchored to the peripheral walls by a circumferential fastening means, e.g. an adhesive tape. The flaps could also be secured in the slots in a positive manner, e.g. by a bulging portion at the free ends of the flaps.

In another advantageous further development of the invention a sliding and supporting layer is provided extending over the surface of the filter web toward the gas outlet opening. This layer can be made of a plastic web material, for example. A nylon web is particularly useful for the purpose. It seves to improve the slidability of the filter pack along the support structure during the placing of the filter pack over the support structure and prevents the filter web from being damaged. Moreover, the sliding and supporting layer provides further stability to the zig-zagged filter web.

For closing the gas outlet opening during transportation it is advantageous, if the gas outlet opening is adapted to be closed by a cover. To this effect it is useful, if the peripheral walls project beyond the gas outlet opening in a way so as to define a rim and the cover is adapted to be fitted into the free space so formed. By the cover a possible damage to the gas outlet opening during transport can be prevented. It can also be used again for covering this opening during transport of the used filter.

An embodiment of the invention is described hereinunder with reference to the drawings in which

Figure 1 is a gas filter according to the invention, with a filter pack in condition ready for operation being placed over a support structure;

Figure 2 is a side elevational view of the filter pack according to Figure 1 in slightly opened transport form;

Figure 3 is a section through the bottom area of the filter pack;

Figure 4 is a top view of the filter pack according to Figure 2 in closed condition; and

Figure 5 is a detailed view of the suspension for the filter web adjacent the gas inlet opening.

The drawings show a room air filter 1 which comprises a rectangular frame 2, a support structure 3 and a filter pack 4. The frame is designed as a lower peripheral frame for the gas filter and is provided with a peripheral holding groove 5 the purpose of which will be explained later on in the specification.

In the embodiment shown the support structure 3 is composed of eight structure elements 6 which are tapered in the direction of the free ends thereof and whose broad bases are anchored to the frame. Instead of eight structure elements there can also be used any other number greater or smaller than eight. By arranging the individual structure elements side by side the support structure 3 is given a zig-zag configuration matching the zig-zag shape of a filter web 7 of the filter pack 4, which shape will be dealt with later.

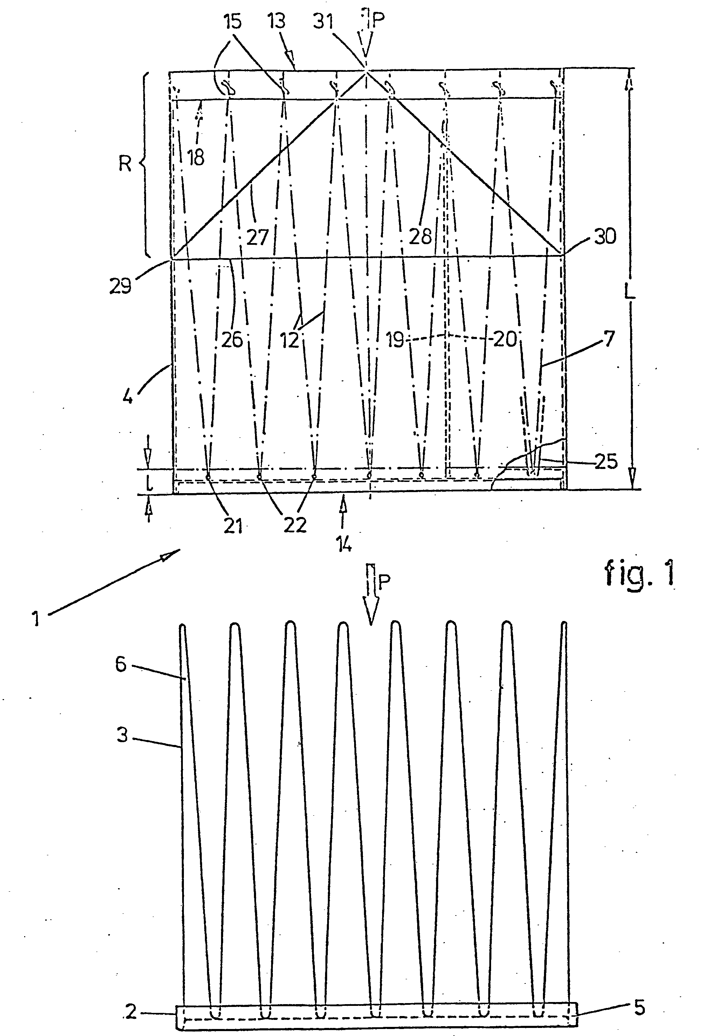

For better understanding of the drawing in Figure 1, the filter pack is drawn above the support structure. The filter pack is a replaceable filter unit which can be withdrawn from the support structure and replaced by a new filter pack when a certain degree of contamination has been reached.

The filter pack comprises four rigid peripheral walls, 8, 9, 10 and 11, which jointly define the same rectangular shape as determined by the holding groove 5. Neighbouring peripheral walls are respectively bonded together, as by adhesive means, along the common edges.

In the embodiment shown the peripheral walls are made of waxed cardboard. They jointly define a rigid container in which the mentioned filter web 7 is accommodated. As can be seen from Figure 1, the filter web 7 has a zig-zag shape conforming the shape of the support structure 3 so as to form pockets, the length of the individual web portions 12 of the filter web being such as to be only little shorter than the length L of the peripheral walls. The peripheral walls 8, 9, 10 and 11 together form a cube-shaped container which at least in the condition shown in Figure 1 is open on two opposed ends. The end which is the upper end in Figure 1 defines the gas inlet opening 13 and the end which is the lower end in Figure 1 defines the gas outlet opening 14. The direction of air flow is indicated in Figure 1 by the arrow P.

The plies 15 of the filter web adjacent the gas inlet opening 13 are hemmed by a strip of fabric which extends beyond the longitudinal edges of the filter web to respectively form flaps 16. These flaps are retained in short vertical slots provided in the free marginal areas of the two peripheral walls 8 and 10 disposed transversely to the direction of the plies. The flaps 16 are held on the outer surface of the peripheral walls by an adhesive tape 18 surrounding the gas inlet opening (Figure 1 and 5)

The longitudinal edges 19 and 20 of two neighbouring web portions 12 of the filter web 7 which have a common ply adjacent the gas inlet opening 13 are connected to each other, as by a strip of fabric similar to the one used at the plies 15, to form a filter pocket. The filter pockets so formed are conically tapered toward the gas inlet opening 13 and widen toward the gas outlet opening 14.

In the area I adjacent the gas outlet opening 14 end portions of the edges of the openings of the filter pockets are adhesively bonded to the respective adjacent peripheral walls, whereby a peripheral sealing band is formed in this area which is composed of the adhesively fixed mouthpieces of the filter pockets.

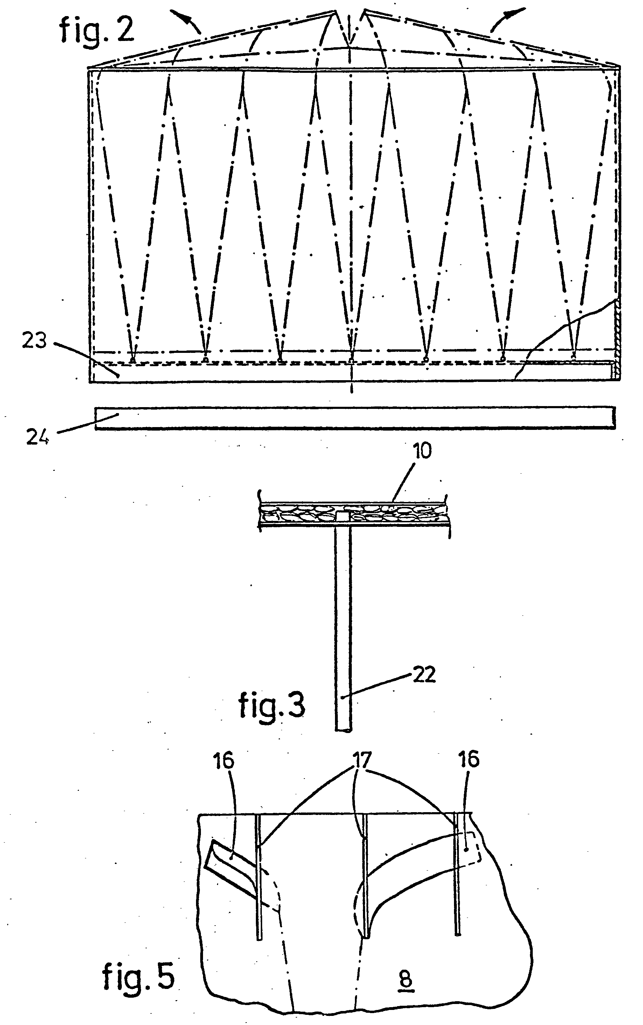

The plies 21 of the filter web 7 disposed adjacent the gas outlet end 14 are held by tensioning means 22 which extend in the direction of the plies and are anchored to the opposed peripheral walls 8 and 10. In the embodiment shown the tensioning means is a wire which has a diameter of 3 mm and which is simply inserted in the lateral peripheral walls in the way as shown in Figure 3.

At the gas outlet side the peripheral walls project a short distance to form a rim, whereby a shallow free space 23 is formed. This free space is adapted to accommodate a cover 24 which is so dimensioned as to be snug-fitted between the peripheral walls.

The filter web 7 is provided, on the surface thereof facing towards the gas outlet opening 14, with a sliding and supporting layer 25 indicated in Figure 1. This layer is applied to the filter web as by adhesive bonding. In the present case it is made of a nylon web. It facilitates insertion of the filter pack 4 and removal thereof from the support structure 6 and prevents the filter web 7 from being damaged.

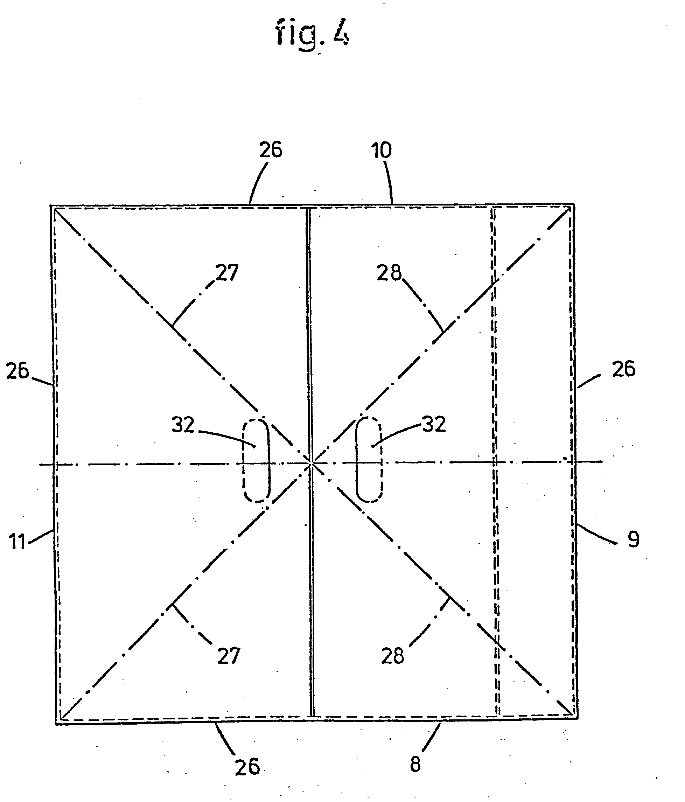

Figure 1 shows the filter pack 4 in its operative condition. For converting the filter pack to give it the shape indicated in Figure 2 which is suitable for transport, marginal portions R of opposite peripheral walls 9 and 11 ending at the gas inlet opening 13 are folded towards each other around folding edges 26 extending transversely to the flow direction P. In the course of this folding movement marginal portions R of peripheral walls 8 and 10 extending between the marginal portions R of walls 9 and 11 are folded upon themselves around one folding edge 26 each and around additional folding edges 27 and 28, extending obliquely from the points 29 and 30 respectively. At the same time the marginal portions R of walls 8, 10 are folded under the marginal portions R of the walls 9, 11. Thus, finally the gas inlet opening 13 will be fully closed by the folded marginal portions, as can be seen from the plan view according to Figure 4. The folding and collapsing is carried out like in the case of a folding box. The peripheral walls 8 and 10 are provided with diagonal folding edges 27 and 28 in addition to the folding edge 26. The two peripheral walls 9 and 11, however, are only provided each with the aforesaid folding edge 26. This can also be noted from Figure 4 in which the folding edges and the diagonal edges are indicated. In the marginal portions of the peripheral walls 9 and 11 corresponding gripping openings 32 for opening and holding of the filter pack 4 can be provided.

For bringing the gas filter 1 in condition for operation the filter pack 4 has to be opened first. This is done by folding the bent marginal portions R of the peripheral walls 9 and 11 upwardly with the aid of the gripping openings 32 whereby the marginal portions R of the peripheral walls 8 and 10 are unfolded as well. By unfolding the peripheral walls the filter web which is secured to the peripheral walls 8 and 10 by the flaps 16 will also be completely unfolded.

Before the filter pack is finally placed over the support structure the bottom 24 is withdrawn and removed.

Subsequently the operator can place the filter pack over the support structure from above such that the filter pockets formed by the filter web are placed over the individual elements of the support structure 3. The rim 23 of the peripheral walls which is provided at the gas outlet end 14 will then be received within the groove 5 of the frame 2.

For removal of a contaminated filter pack these manipulations are carried out in the opposite order.

**Claims**

1. A gas filter, especially room air filter, comprising a rectangular frame and an exchangeable filter pack which has a gas inlet opening and a gas outlet opening and includes a filter web arranged in zig-zag fashion to form a plurality of filter pockets disposed in a side-by-side relationship, said filter web being secured between peripheral walls, and further comprising a support structure mounted within said frame and shaped to match the plies of the filter web to support the same, characterized in that all peripheral walls (8, 9, 10 and 11) of the filter pack are stiff and jointly define a rigid container, the gas inlet opening (13) being adapted to be closed by folding and bending portions (R) of the peripheral walls (8, 9, 10 and 11) adjacent said opening and that the plies (21) provided adjacent the gas outlet opening (14) are held by tensioning means (22) which extend in the direction of the plies and are anchored to opposed peripheral walls (8, 10).

2. A gas filter according to claim 1, characterized in that the longitudinal edges (19, 20) of two adjacent web portions (12) which have a common ply (15) adjacent the gas inlet opening (13) are connected to each other to form a filter pocket.

3. A gas filter according to claim 1 or 2, characterized in that the longitudinal edges of the filter web (7) located adjacent the gas outlet opening (14) are secured to the respective adjacent portions of the peripheral walls (8 and 10).

4. A gas filter according to at least one of claims 1 to 3, characterized in that the plies (15) of the filter web (7) located adjacent the gas inlet opening are secured to the peripheral walls (8, 10) by means of flexible holding means (16).

5. A gas filter according to claim 4, characterized in that the filter web (7) has on both sides of the plies thereof adjacent the gas inlet opening (13) flaps (16) which are anchored in slots (17) provided in the peripheral walls (8, 10) extending transversely to the direction of plies.

6. A gas filter according to claim 5, characterized in that the peripheral walls (8, 10) to which the flaps (16) are anchored are provided with marginal portions (R) adapted to be folded towards each other around folding edges (26) extending transversely to the flow direction (P) and within themselves around folding edges (27 or 28) so as to fall under marginal portions (R) of peripheral walls (9, 11) when the latter are folded towards each other around folding edges (26) for closing the gas inlet opening (13).

7. A gas filter according to at least one of claims 1 to 6, characterized in that the gas outlet opening (14) is adapted to be closed by a cover.

8. A gas filter according to at least one of claims 1 to 7, characterized in that the peripheral walls (8, 9, 10 and 11) project beyond the gas outlet opening (14) in a way so as to form a rim and the cover (24) is adapted to be fitted into the free space thus formed.

## Revendications

1. Filtre à gaz, notamment filtre à air ambiant, comportant un cadre rectangulaire et une garniture filtrante amovible qui a une ouverture d'arrivée du gaz et une ouverture de sortie du gaz et comporte une nappe filtrante disposée en zig-zag pour former une multiplicité de poches filtrantes disposées côte à côte, cette nappe filtrante étant fixée entre les parois périphériques, et comportant en outre une structure support montée à l'intérieur du cadre et formée pour correspondre aux plis de la nappe filtrante pour supporter cette dernière, caractérisé en ce que toutes les parois périphériques (8, 9, 10, 11) de la garniture filtrante sont rigides et définissent conjointement un conteneur rigide, l'ouverture d'arrivée du gaz (13) étant adaptée pour être fermée en repliant et en coudant des portions (R) des parois périphériques (8, 9, 10, 11) adjacentes à cette ouverture et en ce que les plis (21) adjacents à l'ouverture de sortie du gaz (14) sont maintenus par des moyens de tension (22) qui s'étendent dans la direction des plis et sont fixés aux parois périphériques opposées (8, 10).

2. Filtre à gaz selon la revendication 1, caractérisé en ce que les bords longitudinaux (19, 20) de deux portions de nappe adjacentes (12) qui ont un pli commun (15) adjacent à l'ouverture d'arrivée du gaz (13) sont reliés l'un à l'autre pour former une poche filtrante.

3. Filtre à gaz selon la revendication 1 ou la revendication 2, caractérisé en ce que les bords longitudinaux de la nappe filtrante (7) situés au voisinage de l'ouverture de sortie du gaz (14) sont fixés aux portions adjacentes respectives des parois périphériques (8, 10).

4. Filtre à gaz selon l'une au moins des revendications 1 à 3, caractérisé en ce que les plis (15) de la nappe filtrante (7) situés au voisinage de l'ouverture d'arrivée du gaz sont fixés aux parois périphériques (8, 10) par des moyens de tenue flexibles (16).

5. Filtre à gaz selon la revendication 4, caractérisé en ce que le nappe filtrante (7) comporte sur les deux côtés de ses plis adjacents à l'ouverture d'arrivée du gaz (13) des pattes (16) qui sont fixées dans des fentes (17) ménagées dans les parois périphériques (8, 10) s'étendant transversalement à la direction des plis.

6. Filtre à gaz selon la revendication 5, caractérisé en ce que les parois périphériques (8, 10) auxquelles sont fixées les pattes (16) comportent des portions marginales (R) adaptées pour être pliées l'une vers l'autre autour de lignes de pliage (26) s'étendant transversalement à la direction du courant (P) et pour être repliées sur elles-mêmes autour de lignes de pliage (27, 28) de façon à se placer sous des portions marginales (R) des parois périphériques (9, 11) lorsque celles-ci sont repliées l'une vers l'autre autour de lignes de pliage (26) pour fermer l'ouverture d'arrivée du gaz (13).

7. Filtre à gaz selon l'une au moins des revendications 1 à 6, caractérisé en ce que l'ouverture de sortie du gaz (14) est adaptée pour être fermée par un couvercle.

8. Filtre à gaz selon l'une au moins des revendications 1 à 7, caractérisé en ce que les parois périphériques (8, 9, 10, 11) se projettent au-delà de l'ouverture de sortie du gaz (14) de manière à former un rebord et en ce que le couvercle (24) est adapté pour être logé dans l'espace libre ainsi formé.

**Patentansprüche**

1. Gasfilter, insbesondere Raumluftfilter, mit einem rechteckigen Rahmen und einer auswechselbaren, eine Gaseintritts- und eine Gasaustrittsöffnung aufweisende Filterpackung, die eine zickzack-förmig zur Bildung einer Anzahl nebeneinanderliegender Filtertaschen gestaltete Filterstoffbahn enthält, die zwischen Umfangswänden befestigt ist, sowie mit einem Rahmen befestigten, komplementär zu den Falten der Filterstoffbahn geformten Stützgitter für die Aufnahme derselben, dadurch gekennzeichnet, daß alle Umfangswände (8, 9, 10 und 11) der Filterpackung steif ausgebildet sind und miteinander einen starren Behälter bilden, wobei dessen Gaseintrittsöffnung (13) durch Abknicken und Umlegen von dieser Öffnung benachbarter Randstreifen (R) der Umfangswände (8, 9, 10 und 11) verschließbar ist und daß die im Bereich der Gasaustrittsöffnung (14) vorhandenen Falten (21) von Zugmitteln (22) gehalten sind, die in Faltenrichtung verlaufen und in einander gegenüberliegenden Umfassungswänden (8, 10) verankert sind.

2. Gasfilter nach Anspruch 1, dadurch gekennzeichnet, daß die Längsränder (19, 20) zweier benachbarter, an der Gaseintrittsöffnung (13) eine gemeinsame Falte (15) aufweisender Bahnabschnitte (12) zur Bildung einer Filtertasche miteinander verbunden sind.

3. Gasfilter nach Anspruch 1 oder 2, dadurch gekennzeichnet, daß die im Bereich der Gasaustrittsöffnung (14) vorhandenen Längsränder der Filterstoffbahn (7) an den jeweils benachbarten Bereichen der Umfassungswände (8 und 10) befestigt sind.

4. Gasfilter nach wenigstens einem der Ansprüche 1—3, dadurch gekennzeichnet, daß die im Bereich der Gaseintrittsöffnung vorhandenen Falten (15) der Filterstoffbahn (7) über flexible Halteelemente (16) an den Umfassungswänden (8, 10) befestigt sind.

5. Gasfilter nach Anspruch 4, dadurch gekennzeichnet, daß die Filterstoffbahn (7) zu beiden Seiten ihrer an der Gaseintrittsöffnung (13) vorhandenen Falten Laschen (16) aufweist, die in Schlitzen (17) der quer zur Faltenrichtung verlaufenden Umfassungswände (8, 10) verankert sind.

6. Gasfilter nach Anspruch 5, dadurch gekennzeichnet, daß die Umfassungswände (8, 10), an denen die Laschen (16) verankert sind, Randstreifen (R) aufweisen, die um quer zur Strömungsrichtung (P) verlaufende Knickkanten (26) gegeneinander und um Faltlinien (27 oder 28) so faltbar sind, daß sie unter die Randstreifen (R) der Umfassungswände (9, 11) zu liegen kommen, wenn letztere zum Verschließen der Gaseintrittsöffnung (13) gegeneinander um Knickkanten (26) gefaltet werden.

7. Gasfilter nach wenigstens eimen der Ansprüche 1—6, dadurch gekennzeichnet, daß die Gasaustrittsöffnung (14) durch einen Deckel verschließbar ist.

8. Gasfilter nach wenigstens einem der Ansprüche 1—7, dadurch gekennzeichnet, daß die Umfassungswände (8, 9, 10, 11) gegenüber der Gasaustrittsöffnung (14) randartig vorstehen und der Deckel (24) in den dadurch gebildeten Freiraum einsetzbar ist.

**0 013 356**

fig. 1

0 013 356

fig. 2

23

24

10

22

fig. 3

16    17    16

fig. 5    8

2

# fig. 4